# EUROPEAN PATENT SPECIFICATION

(11) **EP 4 275 882 B1**
(45) Date of publication and mention of the grant of the patent: **31.12.2025**
(21) Application number: 22774964.5
(22) Date of filing: 02.03.2022
(51) Int. Cl.: B32B 9/00, B32B 29/00, B65D 65/40

(54) **GAS BARRIER LAMINATE AND PACKAGING MATERIAL PROVIDED THEREWITH**
GASSPERRLAMINAT UND DAMIT VERSEHENES VERPACKUNGSMATERIAL
STRATIFIÉ DE BARRIÈRE CONTRE LES GAZ ET MATÉRIAU D'EMBALLAGE DOTÉ DE CELUI-CI

(30) Priority: 22.03.2021 JP 2021047172
(43) Date of publication of application: 15.11.2023
(73) Proprietor: TOPPAN INC., Tokyo 110-0016 (JP)
(72) Inventor: KOSHIYAMA Yoshiki, Tokyo 110-0016 (JP); KAMINAGA Junichi, Tokyo 110-0016 (JP); KOJIMA Yumiko, Tokyo 110-0016 (JP); ISHII Rika, Tokyo 110-0016 (JP); WAKABAYASHI Hiroyuki, Tokyo 110-0016 (JP)
(74) Representative: TBK
(86) International application number: PCT/JP2022/008936
(87) International publication number: WO 2022/202168

(56) References cited:
- WO-A1-2021/010040
- CN-A- 110 846 931
- JP-A- 2005 178 829
- JP-A- 2010 207 117
- JP-A- H07 108 774
- JP-A- H07 223 686
- JP-A- H07 256 811
- JP-A- S5 985 748
- JP-U- S59 196 455
- US-A1- 2011 223 401
- US-A1- 2019 270 289

## Description

### Technical Field

The present invention relates to a gas barrier laminate and a wrapping material including the same.

### Background Art

In recent years, there has been an increasing trend in plastic-free due to increasing the environmental consciousness arising from marine plastic waste problems and the like. In the field of wrapping materials, the demand for replacing plastic materials with paper is increasing.

Paper is a material originally having high gas permeability. Therefore, in order to impart gas barrier property required for a wrapping material using paper, paper and a material having low gas permeability are bonded each other, or paper is coated with a material having low gas permeability. That is, it is necessary to form a gas barrier layer on the paper.

On the other hand, paper is a material originally having a fold holding properties (dead hold properties), and has a feature of being easily processed. For this reason, even when paper on which a gas barrier layer has been formed by some way is processed into a wrapping bag having an acute angle fold, such as a pillow wrapping bag, a three-side seal wrapping bag, or a gusset wrapping bag, it is required that the gas barrier property of the wrapping bag does not decrease.

The gas barrier laminate described in Patent Document 1 is a gas barrier laminate having a water vapor barrier layer and a gas barrier layer in this order on at least one surface of a paper support. The water vapor barrier layer contains a layered inorganic compound having an aspect ratio of 50 or more and a thickness of 200nm or less, a cation resin and an anion binder, wherein the content of the layered inorganic compound is 0.1 to 800 parts by weight based on 100 parts by weight of the anion binder, and the gas barrier layer contains a water-soluble macromolecular.

### Citation List

### Patent Literature

[Patent Document 1] Japanese Patent Application Publication No. 2020-069783

### Summary of Invention

### Technical Problem

When the gas barrier laminate described in Patent Document 1 is bent, there is a problem in that the water vapor permeability or the oxygen permeability is reduced by two times or more.

An aspect of the present disclosure is to provide a gas barrier laminate capable of exhibiting sufficient gas barrier property even after being folded, and a wrapping material comprising the same.

### Solution to Problem

According to an aspect of the present disclosure, there is provided a gas barrier laminate including a paper base, a first resin layer, a deposition layer, and a second resin layer layered on each other, wherein the paper base, the first resin layer, the deposition layer, and the second resin layer are layered in order, a thickness of the paper base is 20µm or more and 40µm or less, and a density of the paper base is 0.8g/cm³ or more and 1.5g/cm³ or less.

In the gas barrier laminate according to an aspect of the present disclosure, the thickness and density of the paper base are within the above-described numerical ranges, the entire gas barrier laminate is thinned, and the density of the paper base is increased, so that cracking of the gas barrier layer when it is bent may be suppressed. Since the thickness of the paper base is 20µm or more and 40µm or less, the tensile stress applied to the gas barrier layer when the gas barrier laminate is bent may be reduced, and thus cracking of the gas barrier layer may be suppressed. In addition, by setting the density of the paper base to 0.8g/cm³ or more and 1.5g/cm³ or less, the flatness of the deposition layer can be improved. Thus, the initial gas barrier property of the laminate can be improved. Moreover, by stabilizing the thickness of the deposition layer, unevenness is less likely to be provided on the surface of the deposition layer. For this reason, since it is difficult to provide a fragile portion in the deposition layer, it can be said that increasing the density of the paper base contributes to suppressing cracking of the gas barrier layer. Therefore, even after the gas barrier laminate is bent, sufficient gas barrier property can be exhibited.

The first resin layer is a layer including a resin composition including at least one of polyolefin, polyvinyl alcohol, ethylene-vinyl alcohol copolymer, and epoxy resin.

The second resin layer is a layer containing a polyolefin resin having at least one of a carboxyl group, a salt of a carboxyl group, a carboxylic acid anhydride group, and a carboxylic acid ester. In this case, it is possible to suppress cracking of the deposition layer while exhibiting water vapor barrier property due to the second resin layer.

A thickness of the deposition layer is 30nm or more and 100nm or less. In this case, the gas barrier laminate can exhibit favorable water vapor barrier property and bending resistance.

The deposition layer is any of an aluminum layer, a silicon oxide layer, and an aluminum oxide layer. In this case, the gas barrier laminate may exhibit favorable water vapor barrier property and bending resistance.

A thickness of the first resin layer is 2µm or more and 10µm or less.

A thickness of the second resin layer is 2µm or more and 10µm or less. In this case, it is possible to form a gas barrier laminate exhibiting favorable water vapor barrier property and bending resistance while suppressing the production cost.

The thickness of the paper base may be 20µm or more and 37µm or less, and the thickness of the second resin layer may be 5µm or more and 10µm or less. In this case, even after the gas barrier laminate is bent, the gas barrier property of the gas barrier laminate can be favorably maintained.

The density of the paper base may be 1.0g/cm³ or more and 1.5g/cm³ or less. In this case, the gas barrier laminate may exhibit favorable water vapor barrier property.

The wrapping material according to an aspect of the present disclosure may include a gas barrier laminate.

### Advantageous Effects of Invention

According to one aspect of the present disclosure, it is possible to provide a gas barrier laminate capable of exhibiting sufficient gas barrier property even after being folded, and a wrapping material comprising the same.

### Brief Description of Drawings

FIG. 1 is a schematic cross-sectional view illustrating a layer structure of a gas barrier laminate according to an embodiment.
FIG. 2 is a schematic cross-sectional view for explaining a state in which the gas barrier layer is easily broken when the paper layer is thick.
FIG. 3 is a schematic cross-sectional view for explaining a state in which the gas barrier layer is hardly broken when the paper layer is thin.

### Description of Embodiments

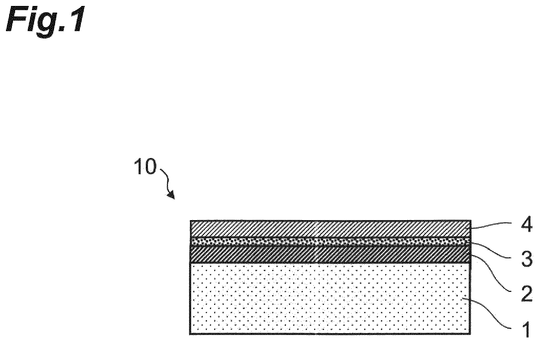

Hereinafter, a gas barrier laminate and a gas barrier wrapping material comprising the same according to an embodiment of the present disclosure will be described in detail with reference to the accompanying drawings. FIG. 1 is a schematic cross-sectional view showing a layer structure of a laminate 10 according to an embodiment.

As shown in FIG. 1, the laminate 10 is a gas barrier laminate including a paper base 1, a first resin layer 2, a deposition layer 3, and a second resin layer 4. The paper base 1, the first resin layer 2, the deposition layer 3, and the second resin layer 4 are sequentially laminated in a thickness direction of the laminate 10 (hereinafter, it is simply referred as "thickness direction"). In one embodiment, at least the deposition layer 3 functions as a gas barrier layer in the laminate 10.

The paper base 1 is a layered base material that functions as a main body of the laminate 10. A material contained in the paper base 1 is not particularly limited. The material is appropriately selected according to the use of the wrapping material including the laminate 10, for example. The paper base 1 may be, for example, paper containing plant-derived pulp as a main component. Specific examples of the paper include wood free paper, special wood free paper, coated paper, art paper, cast-coated paper, wood free paper in large size, craft paper, and glassine paper. The paper base 1 may include a plurality of sheets of paper or may include a plurality of types of paper. In these cases, the papers may be overlapped on each other.

The thickness of the paper base 1 is 20µm or more and 40µm or less. Therefore, it can be said that the paper base 1 is made relatively thin. When the paper base 1 is 20µm or more, the laminate 10 is less likely to be unexpectedly damaged or the like. Since the paper base 1 is 40µm or less, it is possible to suppress stresses applied to the deposition layer 3 or the like (compressive stress) when the laminate 10 is bent. This is because stresses applied to the deposition layer 3 or the like tend to increase as the paper base 1 becomes thicker. The paper base 1 may be 37µm or less, 35µm or less, 33µm or less, 28µm or more, or 30µm or more. The thickness of the paper base 1 is determined by a method described in JIS P 8118:2014, for example.

The density of the paper base 1 is 0.8g/cm³ or more and 1.5g/cm³ or less. Generally, the densities of widely distributed papers (for example, copy paper) are about 0.7g/cm³. Therefore, it can be said that the density of the paper base 1 is relatively high. When the density of the paper base 1 is 0.8g/cm³ or more, the smoothness of the first resin layer 2 and the deposition layer 3 located on the paper base 1 can be favorably improved. The density of the paper base 1 is obtained by dividing the basis weight of the paper base 1 by the thickness of the paper base 1. The density of the paper base 1 may be 1.0g/cm³ or more, 1.10g/cm³ or more, 1.15g/cm³ or more, or 1.30g/cm³ or less, 1.20g/cm³ or less, or 1.15g/cm³ or less. The basis weight of the paper base 1 is obtained by a method described in JIS P 8124:2011, for example.

The weight of the paper base 1 is, for example, 50wt% or more, 70wt% or more, or 80wt% or more based on the entire laminate 10. When the weight of the paper base 1 is 50wt% or more, it can be said that the entire gas barrier laminate is made of paper. From the viewpoint of reduction in the amount of plastic material used in forming the laminate 10, recyclability, and the like, it is desirable that the weight of paper in the laminate 10 be as large as possible. The wrapping material having the laminate 10 may be a wrapping paper bag. The wrapping paper bag is a package to which an identification of the paper-made wrapping is attached based on the Act on the Promotion of Effective Utilization of Resources in Japan.

The first resin layer 2 is a layer serving as a base layer of the deposition layer 3 (that is, anchor coat layer), and includes, for example, various resin compositions generally used as an anchor coat for deposition. Examples of the resin composition include polyolefin, polyvinyl alcohol, ethylene-vinyl alcohol copolymer, and epoxy resin. When the resin composition contains polyvinyl alcohol or the like, the resin composition can exhibit an oxygen barrier property, and thus both the water vapor barrier property and the oxygen barrier property of the laminate 10 can be improved. The coating amount and thickness of the first resin layer 2 are not particularly limited. From the viewpoint of the stress applied to the deposition layer 3 and the like, the thickness of the first resin layer 2 is limited to the minimum extent necessary. The thickness of the first resin layer 2 is limited to such an extent that it can function as an anchor coat for deposition, for example. The thickness of the first resin layer 2 is 2µm or more and 10µm or less.

The deposition layer 3 is a layer formed by a well-known method such as a vacuum deposition method, a sputtering method, or a chemical vapor deposition method (CVD method). From the viewpoint of film deposition speed and productivity, a vacuum deposition method may be used. From the viewpoint of gas barrier performance, economic efficiency, ease of processing, and the like of the deposition layer, the deposition layer 3 is any of an aluminum layer, an aluminum oxide layer, and a silicon oxide layer.

From the viewpoint of gas barrier performance, the deposition layer 3 is 30nm or thicker. The deposition layer 3 may be thicker than or equal to 40nm, or, thicker than or equal to 50nm. If the deposition layer 3 is too thick, it is likely to be easily cracked and the productivity at the time of deposition is likely to decrease. Therefore, the deposition layer 3 is 100nm or less from the viewpoint of economic efficiency, breakage prevention, and the like. The deposition layer 3 may be less than or equal to 80nm, or, less than or equal to 60nm.

The second resin layer 4 functions as an overcoat layer that protects the deposition layer 3 and covers the deposition layer 3. In one embodiment, the second resin layer 4 contacts and covers the deposition layer 3. As the material of the second resin layer 4, for example, similarly to the first resin layer 2, a material having a high affinity with the deposition layer 3 is used. The second resin layer 4 containing the material is a layer containing a polyolefin resin having at least one of a carboxyl group, a salt of a carboxyl group, a carboxylic acid anhydride group, and a carboxylic acid ester.

Polyolefin is one of materials excellent in flexibility. For this reason, since the second resin layer 4 contains polyolefin, it is possible to exhibit an effect of suppressing cracking of the deposition layer 3 after bending. In addition, since the second resin layer 4 contains the crystallized polyolefin, the water vapor barrier property of the second resin layer 4 can be favorably exhibited. Furthermore, since the polyolefin resin contains a carboxyl group, the adhesion between the second resin layer 4 and the deposition layer 3 can be improved.

The thickness of the second resin layer 4 is 2µm or more and 10µm or less. As the second resin layer 4 becomes thicker, the deposition layer 3 becomes closer to the center (neutral position) of the laminate 10 in the thickness direction. Accordingly, the stress applied to the deposition layer 3 or the like is easily relaxed when the laminate 10 is bent, and the deposition layer 3 or the like is less likely to be cracked. Therefore, the bending resistance of the laminate 10 is improved (that is, the gas barrier property of the laminate 10 are easily maintained even after bending). On the other hand, as the thickness of the second resin layer 4 increases, the manufacturing cost of the laminate 10 increases. Therefore, the thickness of the second resin layer 4 is 2µm or more and 10µm or less from the viewpoint of the balance between economic efficiency, gas barrier property (particularly, water vapor barrier property), and bending resistance. The thickness of the second resin layer 4 may be 2.5µm or more, 4µm or more, 5µm or more, 8µm or less, or 7µm or less.

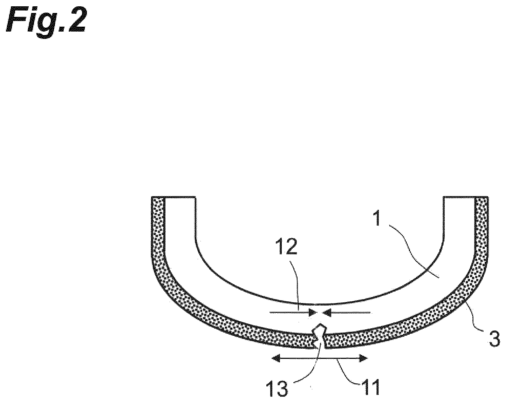

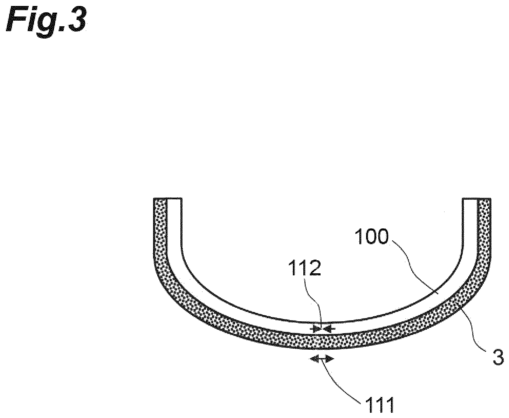

The operation and effect of the laminate 10 according to the embodiment described above will be described with reference to examples shown in FIGS. 2 and 3. FIG. 2 is a schematic cross-sectional view for explaining a state in which the gas barrier layer is easily broken when the paper layer is thick. FIG. 3 is a schematic cross-sectional view for explaining a state in which the gas barrier layer is hardly broken when the paper layer is thin. The paper base 1 shown in FIG. 2 is thicker than 40µm, and the paper base 100 shown in FIG. 3 is not thinner than 20µm and not thicker than 40µm.

As shown in FIG. 2, when the paper base 1 is bent, a large compressive stress 12 is applied to the paper base 1, and a large tensile stress 11 is applied to the deposition layer 3. Therefore, when the paper base 1 is bent, cracks 13 are likely to occur in the deposition layer 3. On the other hand, as shown in FIG. 3, when the paper base 100 is bent, the compressive stress 112 applied to the paper base 100 and the tensile stress 111 applied to the deposition layer 3 are smaller than the compressive stress 12 and the tensile stress 11 shown in FIG. 2, respectively. Therefore, cracking of the deposition layer 3 due to tensile stress is less likely to occur. In addition, since the compressive stress 112 and the tensile stress 111 offset each other before cracking of the deposition layer 3 occurs, cracking is less likely to occur in the deposition layer 3 even after bending or the like. Therefore, by making the thickness of the paper base 1 20µm or more and 40µm or less, cracking is likely to be less likely to occur in the deposition layer 3.

In addition, the density of the paper base 1 according to an embodiment is 0.8g/cm³ or more and 1.5g/cm³ or less. By increasing the density of the paper base 1, the flatness of the first resin layer 2 formed on the paper base 1 is improved. Thus, the thickness of the deposition layer 3 formed on the first resin layer 2 can be stabilized. Therefore, the initial gas barrier property of the laminate 10 can also be improved. By stabilizing the thickness of the deposition layer 3, unevenness is less likely to be provided on the surface of the deposition layer 3. When unevenness is provided on the deposition layer 3, cracks and defects starting from the unevenness are likely to occur in the deposition layer 3. In contrast, when the density of the paper base 1 is relatively high, the thickness of the deposition layer 3 is stable, and thus it is difficult to provide a fragile portion in the deposition layer 3. Therefore, damage to the deposition layer 3 due to bending of the laminate 10 or the like is less likely to occur. Consequently, the gas barrier property of the laminate 10 can be maintained even after being folded.

Since the weight of the paper base 1 according to an embodiment is 50wt% or more based on the entire laminate 10, it can be said that the laminate 10 is made of paper as a whole. Therefore, the laminate 10 has a fold holding properties which is a characteristic of paper.

The second resin layer 4 is a layer containing a polyolefin resin having at least one of a carboxyl group, a salt of a carboxyl group, a carboxylic acid anhydride group, and a carboxylic acid ester. Polyolefin is excellent in flexibility. Therefore, since the pressure applied to the deposition layer 3 can be relaxed when the laminate 10 is bent, the effect of suppressing cracking of the deposition layer 3 can be exhibited. In addition, since the second resin layer 4 contains the crystallized polyolefin, the second resin layer 4 can exhibit favorable water vapor barrier property. Furthermore, since the polyolefin resin contains a carboxyl group, the adhesion between the second resin layer and the deposition layer 3 is improved.

The thickness of deposition layer 3 is greater than or equal to 30nm and less than or equal to 100nm. In addition, the deposition layer 3 is any of an aluminum layer, a silicon oxide layer, and an aluminum oxide layer. By using such a deposition layer 3, both the water vapor barrier property and the bending resistance of the laminate 10 can be achieved at a higher level.

The thickness of the second resin layer 4 is 2µm or more and 10µm or less. Hereby, it is possible to achieve both the water vapor barrier property and the bending resistance of the laminate 10 at a high level while suppressing costs.

When the laminate 10 according to one embodiment, which can be said to be made of paper, is used as a wrapping material, excellent gas barrier property can be exhibited even in a packaging form having folds. Therefore, the plastic gas barrier wrapping material can be replaced with the wrapping material including the laminate 10, thereby contributing to reduction of plastic waste. In addition, for example, by providing a heat-sealable resin layer on one surface of the laminate 10, it is possible to form a gas barrier wrapping material which can be applied to a bag-shaped packaging form having a fold (for example, three side sealing, pillow packaging, gusset packaging, or the like). Examples of the resin used for the heat-sealable resin layer include polyolefin-based resins such as polyethylene and polypropylene, polyethylene terephthalate (PET), and polyacrylonitrile (PAN).

### Example

The gas barrier laminate according to the present disclosure will be described in detail based on the following examples and comparative examples.

### (Example 1)

Glassine N (thickness of 33µm, density of 1.17) manufactured by Nippon Paper Industries Co., Ltd. was used as the paper base. Subsequently, a polyolefin aqueous dispersion (polyolefin aqueous dispersion containing Chemipearl S500 manufactured by Mitsui Chemicals, Inc.) was coated onto the paper base using a bar coater, and then the polyolefin aqueous dispersion was dried in an oven to form a first resin layer (average coating film thickness of 4µm). Subsequently, aluminum was deposited on the first resin layer by a vacuum deposition method to form an aluminum film (thickness of 50nm) as a deposition film. Subsequently, a polyolefin aqueous dispersion (polyolefin aqueous dispersion containing Chemipearl S500 manufactured by Mitsui Chemicals, Inc.) was coated onto the deposition film using a bar coater, and then the polyolefin aqueous dispersion was dried in an oven to form a second resin layer (average coating film thickness of 5µm). As described above, a laminate in which the paper base, the first resin layer, the deposition layer, and the second resin layer were sequentially laminated was formed.

In addition, an initial laminate which was not bent, a valley-folded laminate which was returned to an original state after being valley-folded, and a mountain-folded laminate which was returned to an original state after being mountain-folded were prepared. The valley-folded laminate corresponds to a laminate which is folded in two so that the second resin layer is positioned at the innermost side. The mountain-folded laminate corresponds to a laminate which is folded in two so that the second resin layer is positioned at the outermost side. By forming a fold line on the laminate while the roller of 1500g was rotated once at a speed of 300mm / min, the gas barrier laminate was folded into two.

### <Water Vapor Permeability and Degree of Bending Deterioration>

The water vapor permeability (g/m²·day) of the laminate at a temperature of 40°C. and a relative humidity of 90% was measured by an isobaric method using a water vapor permeability measuring device as a measuring device. In this measurement, three measurements were performed: an initial value (initial laminate), after valley folding (valley-folded laminate), and after mountain folding (mountain-folded laminate). The measurement results are shown in Table 1. In Table 1, "initial" indicates the measurement result of the water vapor permeability of the initial laminate, "valley folding" indicates the measurement result of the water vapor permeability of the valley-folded laminate, and "mountain folding" indicates the measurement result of the water vapor permeability of the mountain-folded laminate.

As the degree of bending deterioration, how many times the water vapor permeability of the valley-folded laminate and the water vapor permeability of the mountain-folded laminate became the water vapor permeability of the initial laminate was calculated. The calculation results are shown in Table 1.

### (Example 2)

A laminate of the same materials and layer structure as in Example 1 was prepared except that Cristep (thickness of 35µm, density of 1.07) manufactured by Oji F-Tex Co., Ltd. was used as the paper base, and was evaluated in the same manner.

### (Example 3)

A laminate of the same materials and layer structure as in Example 1 was prepared except that thick glassine (thickness of 28µm, density of 1.06) manufactured by Oji F-Tex Co., Ltd. was used as the paper base, and was evaluated in the same manner.

### (Example 4)

A laminate of the same materials and layer structure as in Example 1 was prepared except that Solide Lucent (thickness of 39µm, density of 1.04) manufactured by UPM was used as the paper base, and was evaluated in the same manner.

### (Example 5)

A laminate of the same materials and layer structure as in Example 1 was prepared except that A Ginrei N (thickness of 37µm, density of 0.81) manufactured by Nippon Paper Industries Co., Ltd. was used as the paper base, and was evaluated in the same manner.

### (Example 6)

A laminate of the same materials and layer structure as in Example 1 was prepared except that PVA (polyvinyl alcohol, degree of polymerization is 500, average coating film thickness of: 4µm) was used as the first resin layer, and was evaluated in the same manner.

### (Example 7)

A laminate of the same materials and layer structure as in Example 1 was prepared except that MAXIVE C-93AT (epoxy-based adhesive resin, average coating film thickness of 4µm) manufactured by Mitsubishi Gas Chemical Company, Inc. was used as the first resin layer, and was evaluated in the same manner.

### (Example 8)

A laminate of the same materials and layer structure as in Example 1 was prepared except that the deposition layer was a silicon oxide layer (thickness of 30nm), and was evaluated in the same manner.

### (Example 9)

A laminate of the same materials and layer structure as in Example 1 was prepared except that the deposition layer was an aluminum oxide layer (thickness of 30nm), and was evaluated in the same manner.

### (Example 10)

A laminate having the same materials and layer structure as in Example 1 was prepared except that the average coating thickness of the second resin layer was 8µm, and was evaluated in the same manner.

### (Example 11)

A laminate having the same materials and layer structure as in Example 1 was prepared except that the average coating thickness of the second resin layer was 2.5µm, and was evaluated in the same manner.

### (Comparative Example 1)

A laminate of the same materials and layer structure as in Example 1 was prepared except that Ryuou-coat(thickness of 46µm thick, density of 1.12 density) manufactured by Oji Paper Co., Ltd. was used as the paper base, and was evaluated in the same manner.

### (Comparative Example 2)

A laminate of the same materials and layer structure as in Example 1 was prepared except that Special Kohmo S(thickness of 47µm, density of 1.11) manufactured by FUJI KAKO Co., Ltd. was used as the paper base, and was evaluated in the same manner.

### (Comparative Example 3)

A laminate of the same materials and layer structure as in Example 1 was prepared except that Solide Strong (thickness of 66µm, density of 0.88) manufactured by UPM was used as the paper base, and was evaluated in the same manner.

### (Comparative Example 4)

A laminate of the same materials and layer structure as in Example 1 was prepared except that Enza HS (thickness of 64µm , density of 0.78) manufactured by APP was used as the paper base, and was evaluated in the same manner.

The above results are summarized in Table 1.

**[Table 1]**

| | | Example 1 | Example 2 | Example 3 | Example 4 | Example 5 | Example 6 | Example 7 | Example 8 | Example 9 | Example 10 | Example 11 | Compara -tive Example 1 | Compara -tive Example 2 | Compara -tive Example 3 | Compara -tive Example 4 |
|---|---|---|---|---|---|---|---|---|---|---|---|---|---|---|---|---|
| paper base | Manufacture | Nippon Paper Industries | Oji F-Tex | Oji F-Tex | UPM | Nippon Paper Industries | Nippon Paper Industries | Nippon Paper Industri es | Nippon Paper Industries | Nippon Paper Industries | Nippon Paper Industries | Nippon Paper Industries | Oji Paper | FUJI KAKO | UPM | APP |
| | brand | Glassine N | thick glassine | Cristep | Solide Lucent | A Ginrei N | Glassine N | Glassine N | Glassine N | Glassine N | Glassine N | Glassine N | Ryuou-coat | Special Kohmo S | Solide Strong | Enza HS |
| | thickness | 33 | 28 | 35 | 39 | 37 | 33 | 33 | 33 | 33 | 33 | 33 | 46 | 47 | 66 | 64 |
| | density | 1.17 | 1.06 | 1.07 | 1.04 | 0.81 | 1.17 | 1.17 | 1.17 | 1.17 | 1.17 | 1.17 | 1.12 | 1.11 | 0.88 | 0.78 |
| first resin layer | material | Chemi pearl S 500 | Chemi pearl S 500 | Chemi pearl S 500 | Chemi pearl S 500 | Chemi pearl S 500 | PVA 500 | C-93AT | Chemi pearl S 500 | Chemi pearl S 500 | Chemi pearl S 500 | Chemi pearl S 500 | Chemi pearl S 500 | Chemi pearl S 500 | Chemi pearl S 500 | Chemi pearl S 500 |
| | average thickness(µm ) | 4 | 4 | 4 | 4 | 4 | 4 | 4 | 4 | 4 | 4 | 4 | 4 | 4 | 4 | 4 |
| deposition layer | material | Al | Al | Al | Al | Al | Al | Al | SiOx | AlxOy | Al | Al | Al | Al | Al | Al |
| | thickness(µm ) | 50 | 50 | 50 | 50 | 50 | 50 | 50 | 30 | 30 | 50 | 50 | 50 | 50 | 50 | 50 |
| second resin layer | material | Chemi pearl S 500 | Chemi pearl S 500 | Chemi pearl S 500 | Chemi pearl S 500 | Chemi pearl S 500 | Chemi pearl S 500 | Chemi pearl S 500 | Chemi pearl S 500 | Chemi pearl S 500 | Chemi pearl S 500 | Chemi pearl S 500 | Chemi pearl S 500 | Chemi pearl S 500 | Chemi pearl S 500 | Chemi pearl S 500 |
| | average thickness(µm ) | 5 | 5 | 5 | 5 | 5 | 5 | 5 | 5 | 5 | 8 | 2.5 | 5 | 5 | 5 | 5 |
| WVTR g/m² · day @40°C 90% | initial | 2.0 | 2.9 | 2.6 | 2.4 | 5.8 | 2.4 | 2.1 | 1.9 | 2.3 | 0.9 | 3.1 | 1.4 | 1.3 | 73 | 41 |
| | valley folding | 2.0 | 3.3 | 2.9 | 2.7 | 6.0 | 2.6 | 2.1 | 2.2 | 2.4 | 0.9 | 3.4 | 1.9 | 1.9 | 80 | 43 |
| | mountain folding | 2.2 | 3.4 | 3.0 | 3.0 | 6.2 | 2.7 | 2.3 | 2.2 | 2.6 | 1.0 | 4.4 | 3.5 | 2.9 | 85 | 45 |
| degree of bending deterioratio n | inner folding | 1.0 | 1.1 | 1.1 | 1.1 | 1.0 | 1.1 | 1.0 | 1.2 | 1.0 | 1.0 | 1.1 | 1.4 | 1.5 | 1.1 | 1.0 |
| | mountain folding | 1.1 | 1.2 | 1.2 | 1.3 | 1.1 | 1.1 | 1.1 | 1.2 | 1.1 | 1.1 | 1.4 | 2.5 | 2.2 | 1.2 | 1.1 |

According to the results of Table 1, in the laminates of Examples in which the thickness of the paper bases was 40µm or less and the densities were in the range of 0.8g/cm³ to 1.5g/cm³, the initial water vapor permeability was 10g or less, and the degree of bending deterioration was less than 2 times. On the other hand, in the laminates of Comparative Examples 1 to 4 in which the paper bases having thicknesses of more than 40µm were used, the initial water vapor permeability was 10g or more, or the degree of bending deterioration was twice or more. In addition, the water vapor permeability of the laminates of Example in which the density of the paper bases was 1.0g/cm³ or more was 5g or less even after bending. In addition, the laminates of Example in which the paper bases were 37µm or less and the average coating film thickness of the second resin layer was 5µm or more had a degree of bending deterioration of 1.2 or less.

The gas barrier laminate according to an aspect of the present disclosure may be used as a wrapping material as it is, but may also be processed into a wrapping bag by using a second resin layer as a sealant layer, facing the second resin layer each other, and heat-sealing a peripheral edge thereof. Even in the case of using as a wrapping bag, since the deterioration of the gas barrier property in the folded portion is small, the laminate can be used as an alternative material instead of a gas barrier wrapping material using a conventional plastic material.

### Reference Signs List

1; paper base,
2; first resin layer,
3; deposition layer;
4; second resin layer;
10; laminate,
11,111; tensile stress
12,112; compressive stress
13; crack of gas barrier layer.

## Claims

1. A gas barrier laminate (10) comprising:
a paper base (1), a first resin layer (2), a deposition layer (3), and a second resin layer (4) laminated on each other,
wherein the paper base (1), the first resin layer (2), the deposition layer (3), and the second resin layer (4) are laminated in order,
wherein a thickness of the paper base (1) is 20µm or more and 40µm or less, and a density of the paper base (1) is 0.8g/cm³ or more and 1.5g/cm³ or less,
wherein the second resin layer (4) is a layer including a polyolefin resin having at least one of a carboxyl group, a salt of a carboxyl group, a carboxylic acid anhydride group, and a carboxylic acid ester,
wherein a thickness of the deposition layer (3) is 30nm or more and 100nm or less,
wherein the deposition layer (3) is any of an aluminum layer, a silicon oxide layer, and an aluminum oxide layer,
wherein a thickness of the second resin layer (4) is 2µm or more and 10µm or less,
wherein the first resin layer (2) is a layer including a resin composition including at least one of polyolefin, polyvinyl alcohol, ethylene-vinyl alcohol copolymer, and epoxy resin, and
wherein a thickness of the first resin layer (2) is 2µm or more and 10µm or less.

2. The gas barrier laminate (10) according to claim 1,
wherein a thickness of the second resin layer (4) is 5µm or more and 10µm or less, and
wherein the thickness of the paper base (1) is 20µm or more and 37µm or less.

3. The gas barrier laminate (10) according to claim 1 or 2,
wherein the density of the paper base (1) is 1.0g/cm³ or more and 1.5g/cm³ or less.

4. A wrapping material comprising the gas barrier laminate (10) according to any one of claims 1 to 3.

5. The gas barrier laminate (10) according to any one of claims 1 to 4,
wherein a weight of the paper base (1) is 50wt% or more based on the entire of the gas barrier laminate.

6. The gas barrier laminate (10) according to any one of claims 1 to 5,
wherein an initial water vapor permeability of the gas barrier laminate (10) measured by an isobaric method under the condition of a temperature of 40°C and a relative humidity of 90% is 10g/m²·day or less.

7. The gas barrier laminate (10) according to any one of claims 1 to 6,
wherein a water vapor permeability of the gas barrier laminate (10) after bending and measured by an isobaric method under the condition of a temperature of 40°C and a relative humidity of 90% is 5g/m²·day or less.

## Patentansprüche

1. Gasbarriere-Laminat (10), umfassend:
eine Papierbasis (1), eine erste Harzschicht (2), eine Abscheidungsschicht (3) und eine zweite Harzschicht (4), die aufeinander laminiert sind,
wobei die Papierbasis (1), die erste Harzschicht (2), die Abscheidungsschicht (3) und die zweite Harzschicht (4) in dieser Reihenfolge laminiert sind,
wobei eine Dicke der Papierbasis (1) 20 µm oder mehr und 40 µm oder weniger ist und eine Dichte der Papierbasis (1) 0,8 g/cm³ oder mehr und 1,5 g/cm³ oder weniger ist,
wobei die zweite Harzschicht (4) eine Schicht ist, die ein Polyolefinharz enthält, das mindestens eines aus einer Carboxylgruppe, einem Salz einer Carboxylgruppe, einer Carbonsäureanhydridgruppe und einem Carbonsäureester aufweist,
wobei eine Dicke der Abscheidungsschicht (3) 30 nm oder mehr und 100 nm oder weniger ist,
wobei die Abscheidungsschicht (3) irgendeine aus einer Aluminiumschicht, einer Siliziumoxidschicht und einer Aluminiumoxidschicht ist,
wobei eine Dicke der zweiten Harzschicht (4) 2 µm oder mehr und 10 µm oder weniger ist,
wobei die erste Harzschicht (2) eine Schicht ist, die eine Harzzusammensetzung enthält, die mindestens eines aus Polyolefin, Polyvinylalkohol, Ethylen-Vinylalkohol-Copolymer und Epoxidharz enthält, und
wobei eine Dicke der ersten Harzschicht (2) 2 µm oder mehr und 10 µm oder weniger ist.

2. Gasbarriere-Laminat (10) gemäß Anspruch 1,
wobei eine Dicke der zweiten Harzschicht (4) 5 µm oder mehr und 10 µm oder weniger ist und
wobei die Dicke der Papierbasis (1) 20 µm oder mehr und 37 µm oder weniger ist.

3. Gasbarriere-Laminat (10) gemäß Anspruch 1 oder 2,
wobei die Dichte der Papierbasis (1) 1,0 g/cm³ oder mehr und 1,5 g/cm³ oder weniger ist.

4. Verpackungsmaterial, das das Gasbarriere-Laminat (10) gemäß einem der Ansprüche 1 bis 3 umfasst.

5. Gasbarriere-Laminat (10) gemäß einem der Ansprüche 1 bis 4,
wobei, bezogen auf das gesamte Gasbarriere-Laminat, ein Gewicht der Papierbasis (1) 50 Gew.-% oder mehr ist.

6. Gasbarriere-Laminat (10) gemäß einem der Ansprüche 1 bis 5,
wobei eine anfängliche Wasserdampfdurchlässigkeit des Gasbarriere-Laminats (10), gemessen durch ein isobares Verfahren unter der Bedingung einer Temperatur von 40 °C und einer relativen Feuchtigkeit von 90 %, 10 g/m²·Tag oder weniger ist.

7. Gasbarriere-Laminat (10) gemäß einem der Ansprüche 1 bis 6,
wobei eine Wasserdampfdurchlässigkeit des Gasbarriere-Laminats (10) nach dem Biegen, gemessen mit einem isobaren Verfahren unter der Bedingung einer Temperatur von 40 °C und einer relativen Feuchtigkeit von 90 %, 5 g/m²·Tag oder weniger ist.

## Revendications

1. Stratifié barrière aux gaz (10) comprenant :
une base en papier (1), une première couche de résine (2), une couche de dépôt (3) et une deuxième couche de résine (4) stratifiées les unes sur les autres,
dans lequel la base en papier (1), la première couche de résine (2), la couche de dépôt (3) et la deuxième couche de résine (4) sont stratifiées dans l'ordre,
dans lequel une épaisseur de la base en papier (1) est 20 µm ou plus et 40 µm ou moins, et une densité de la base en papier (1) est 0,8 g/cm³ ou plus et 1,5 g/cm³ ou moins,
dans lequel la deuxième couche de résine (4) est une couche comportant une résine polyoléfinique ayant au moins l'un parmi un groupe carboxyle, un sel d'un groupe carboxyle, un groupe anhydride d'acide carboxylique et un ester d'acide carboxylique,
dans lequel une épaisseur de la couche de dépôt (3) est 30 nm ou plus et 100 nm ou moins,
dans lequel la couche de dépôt (3) est une couche d'aluminium, une couche d'oxyde de silicium et une couche d'oxyde d'aluminium,
dans lequel une épaisseur de la deuxième couche de résine (4) est 2 µm ou plus et 10 µm ou moins,
dans lequel la première couche de résine (2) est une couche comportant une composition de résine comportant au moins l'un parmi une polyoléfine, un alcool polyvinylique, un copolymère d'éthylène-alcool vinylique et une résine époxy, et
dans lequel une épaisseur de la première couche de résine (2) est 2 µm ou plus et 10 µm ou moins.

2. Stratifié barrière aux gaz (10) selon la revendication 1,
dans lequel une épaisseur de la deuxième couche de résine (4) est 5 µm ou plus et 10 µm ou moins, et
dans lequel l'épaisseur de la base en papier (1) est 20 µm ou plus et 37 µm ou moins.

3. Stratifié barrière aux gaz (10) selon la revendication 1 ou 2,
dans lequel la densité de la base en papier (1) est 1,0 g/cm³ ou plus et 1,5 g/cm³ ou moins.

4. Matériau d'emballage comprenant le stratifié barrière aux gaz (10) selon l'une quelconque des revendications 1 à 3.

5. Stratifié barrière aux gaz (10) selon l'une quelconque des revendications 1 à 4,
dans lequel un poids de la base en papier (1) est de 50 % en poids ou plus par rapport à l'ensemble du stratifié barrière aux gaz.

6. Stratifié barrière aux gaz (10) selon l'une quelconque des revendications 1 à 5,
dans lequel une perméabilité initiale à la vapeur d'eau du stratifié barrière aux gaz (10), mesurée par une méthode isobare dans la condition d'une température de 40 °C et d'une humidité relative de 90 %, est égale ou inférieure à 10 g/m²·jour.

7. Stratifié barrière aux gaz (10) selon l'une quelconque des revendications 1 à 6,
dans lequel une perméabilité à la vapeur d'eau du stratifié barrière aux gaz (10) après pliage et mesurée par une méthode isobare dans la condition d'une température de 40 °C et d'une humidité relative de 90 % est égale ou inférieure à 5 g/m²·jour.
